# EUROPEAN PATENT APPLICATION

(11) **EP 4 821 797 A1**
(43) Date of publication of application: **14.10.2026**
(21) Application number: 24899706.6
(22) Date of filing: 28.11.2024
(51) Int. Cl.: B62D 25/00, B62D 25/04, B62D 27/02

(54) **VEHICLE BODY STRUCTURE AND VEHICLE**

(30) Priority: 06.12.2023 CN 202311669666
(71) Applicant: Great Wall Motor Company Limited, Baoding, Hebei 071000 (CN)
(72) Inventor: QIAO, Xianbo, Baoding, Hebei 071000 (CN)
(74) Representative: Klunker IP Patentanwälte PartG mbB
(86) International application number: PCT/CN2024/135136
(87) International publication number: WO 2025/119066

(57) **Abstract**

Provided are a vehicle body structure and a vehicle. The vehicle body structure includes a sill beam and an A-pillar having a root connected to the sill beam. The A-pillar includes an A-pillar body and a connection member connected to a bottom of the A-pillar body. The connection member is located on a side of the A-pillar body in a left-right direction of a vehicle. A mounting groove is defined by the connection member and the A-pillar body. The sill beam is located in the mounting groove, and is connected to the A-pillar body and the connection member. **In** the vehicle body structure, the mounting groove is formed on the bottom end of the A-pillar, and the sill beam is located in the mounting groove, which improves connection performance between the root of the A-pillar and the sill beam, improving overall vehicle collision safety.

## Description

This application claims priority to Chinese patent application No. 202311669666.1, titled "VEHICLE BODY STRUCTURE AND VEHICLE", and filed with China National Intellectual Property Administration on December 6, 2023, the entire contents of which are incorporated herein by reference.

### FIELD

The invention relates to the field of vehicle technologies, and particularly to a vehicle body structure. The invention also relates to a vehicle including the above vehicle body structure.

### BACKGROUND

In the related art, for an A-pillar in a vehicle body, a root of the A-pillar is generally connected to a sill beam, and an upper part of the A-pillar is connected not only to a front wheelhouse side beam and a cowl cross beam, but also to a roof side beam at a top of the vehicle body to form a coherent side frame structure of the vehicle body.

Regarding a connection between the root of the A-pillar and the sill beam, a welding method is mostly adopted in the related art to connect a bottom end of the A-pillar to the sill beam. Although this connection method realizes a connection between the A-pillar and the sill beam, connection stiffness is low at the root of the A-pillar. As a result, during a vehicle collision, the connection at the root of the A-pillar is prone to a failure, which interrupts a collision force transmission path between the A-pillar and the sill beam, and is therefore unfavorable for improving overall vehicle collision safety.

### SUMMARY

In view of this, it is an object of the invention to provide a vehicle body structure, improving overall vehicle collision safety.

To achieve the above objective, technical solutions of the invention are implemented as follows.

A vehicle body structure is provided. The vehicle body structure includes a sill beam and an A-pillar having a root connected to the sill beam. The A-pillar includes an A-pillar body and a connection member connected to a bottom of the A-pillar body. The connection member is located on a side of the A-pillar body in a left-right direction of a vehicle. A mounting groove is defined by the connection member and the A-pillar body. The sill beam is located in the mounting groove and is connected to the A-pillar body and the connection member.

Further, the mounting groove is a groove structure located at a bottom end of the A-pillar and opened at a front side, a rear side, and a bottom of the mounting groove. The sill beam is fixedly connected to an inner side of the A-pillar body, and then the connection member is sequentially fixedly connected to the A-pillar body and the sill beam, in such a manner that the mounting groove is formed and the sill beam is clamped and tightly held in the mounting groove.

Further, the connection member is integrally formed. The connection member has a body connection part, a middle connection part, and a sill connection part that are sequentially connected from top to bottom. The body connection part is lapped onto and fixedly connected to the A-pillar body. The mounting groove is defined by the sill connection part and a bottom end of the A-pillar body. The sill connection part is lapped onto and fixedly connected to the sill beam.

Further, the middle connection part is lapped onto and fixed to a top of the sill beam; and/or the body connection part has an accommodation groove, the A-pillar body being partially embedded into the accommodation groove.

Further, the connection member is located on a side of the A-pillar body facing towards an interior of the vehicle; and the sill connection part is provided with a connection boss connected to a front floor crossmember.

Further, the connection boss has a connection groove, an end portion of the front floor crossmember being partially embedded into the connection groove; and/or the sill connection part is provided with a reinforcing rib connected to the connection boss.

Further, a remaining part, other than the part embedded into the connection groove, of the end portion of the front floor crossmember is lapped onto and fixedly connected to the middle connection part of the connection member; and the body connection part is provided with a connection flange on a side of the body connection part facing towards a front of the vehicle, the connection flange being lapped onto and fixed to the A-pillar body.

Further, the connection member is integrally cast from an aluminum alloy; and/or the body connection part is connected to the A-pillar body by a rivet, and the sill connection part is connected to the sill beam by a further rivet.

Further, the A-pillar body includes an A-pillar inner plate and an A-pillar reinforcement plate that are assembled with each other, an A-pillar lower-segment reinforcement being disposed in a space defined by the A-pillar inner plate and the A-pillar reinforcement plate. A bottom of the A-pillar lower-segment reinforcement is abutted with the sill beam in the left-right direction of the vehicle, and is connected to the sill beam.

Further, the A-pillar inner plate and the A-pillar reinforcement plate are both made of a carbon fiber composite material; and/or the A-pillar lower-segment reinforcement is made of an aluminum profile.

Further, the A-pillar lower-segment reinforcement, the A-pillar body, and an upper part of the connection member are connected to one another by a first connection member.

Further, the A-pillar is provided with a lower cowl crossmember on a front side of the A-pillar; and the A-pillar lower-segment reinforcement, the A-pillar body, the connection member, and the lower cowl crossmember are connected to one another by a second connection member.

Further, the second connection structure includes a connection component that passes through a connection passage hole and a through hole. The connection passage hole is located on a side of the body connection part of the connection member facing towards a front of the vehicle. The through hole is located on the A-pillar reinforcement plate.

Further, the sill beam is made of an extruded aluminum profile.

Compared with the related art, the invention has the following advantages.

With the vehicle body structure described in the invention, the connection member is disposed at the side of the root of the A-pillar, in such a manner that the mounting groove is defined by the connection member and the A-pillar body, and the sill beam is located in the mounting groove and connected to the A-pillar body and the connection member. In this way, in the vehicle body structure described in the invention, the A-pillar body and the connection member are used to tightly hold the sill beam from two sides of the sill beam, and a connection between the sill beam and each of the A-pillar body and the connection member is utilized, which increases connection stiffness between the root of the A-pillar and the sill beam, and enhances a collision force transmission capability between the A-pillar and the sill beam, improving the overall vehicle collision safety.

In addition, the connection member is formed as one piece, and has a post connection part connected to a vehicle body post and the sill connection part connected to the sill beam, which not only ensures structural strength of the connection member by means of integral forming, but also facilitates an integral formation of the mounting groove with the A-pillar body. Enabling the middle connection part to be lapped onto and fixed at a top of the sill beam increases connection strength between the connection member and the sill beam. Forming the accommodation groove on the body connection part enables the A-pillar to be partially embedded into the accommodation groove, which facilitates a connection between the connection member and the A-pillar, and also increases reliability of the connection between the connection member and the A-pillar.

Further, the connection boss at the sill connection part facilitates a connection to the front floor crossmember, and also increases reliability of a connection between the connection member and the front floor crossmember. The forming of the connection groove on the connection boss further facilitates a connection operation between the front floor crossmember and the connection member, and increases the reliability of the connection between the front floor crossmember and the connection member. By providing the reinforcing rib connected to the connection boss, structural strength at the connection boss is increased by means of the reinforcing rib, to better ensure stability of a connection of the front floor crossmember at the connection boss.

The connection member is integrally cast from the aluminum alloy, which facilitates manufacture of the connection member and also takes advantage of low weight and high strength of a cast aluminum structure, facilitating a lightweight design of the connection member and ensure structural strength of the connection member. Connecting the body connection part to the A-pillar body by the rivet, the sill connection part to the sill beam by the further rivet, and the middle connection part to the sill beam by yet further rivet facilitate the connection operation while ensuring a connection effect, and also reduce connection costs.

Additionally, by configuring the A-pillar to include the A-pillar inner plate and the A-pillar reinforcement plate that are assembled with each other, disposing the A-pillar lower-segment reinforcement in the A-pillar, and allowing the bottom of the A-pillar lower-segment reinforcement to be abutted with the sill beam, stiffness of a lower part of the A-pillar and connection stiffness between the A-pillar and the sill beam are further increased. The A-pillar inner plate and the A-pillar reinforcement plate both made of the carbon fiber composite material facilitate a lightweight design and a styling design of the A-pillar, and also ensure structural strength of the A-pillar. Having the A-pillar lower-segment reinforcement made of the aluminum profile not only facilitates a weight reduction of the A-pillar lower-segment reinforcement, but also ensures structural strength of the A-pillar lower-segment reinforcement.

The A-pillar lower-segment reinforcement, the A-pillar body, and the upper part of the connection member are connected to each other, which increases overall stiffness of the root of the A-pillar and structural stability of the mounting groove, ensuring connection reliability between the A-pillar and the sill beam. The A-pillar lower-segment reinforcement, the A-pillar body, the connection member, and the lower cowl crossmember are connected to each other, which increases reliability of a connection between the A-pillar and the lower cowl crossmember, and thus improves stability of an arrangement of the lower cowl crossmember in the vehicle body and a transmission effect of a collision force between the A-pillar and the lower cowl crossmember.

Another objective of the invention is to provide a vehicle. The vehicle includes the vehicle body structure as described above.

The vehicle described in the invention has the same advantageous effects as the above vehicle body structure, and thus details thereof will be omitted here.

### BRIEF DESCRIPTION OF THE DRAWINGS

The accompanying drawings constituting a part of the invention are used to provide a further understanding of the invention. Exemplary embodiments of the invention and description thereof are used to explain the invention, and do not constitute an improper limitation of the invention. In the accompanying drawings:
FIG. 1 is a schematic view of a vehicle body structure according to an embodiment of the invention.
FIG. 2 is an enlarged schematic view of a part of FIG. 1.
FIG. 3 is a schematic view of a structure illustrated in FIG. 1, viewed from another perspective.
FIG. 4 is a schematic view of a composition of a mounting groove according to an embodiment of the invention.
FIG. 5 is a schematic structural view of a connection member according to an embodiment of the invention.
FIG. 6 is a schematic view of a structure illustrated in FIG. 5, viewed from another perspective.
FIG. 7 is a schematic view of a structure illustrated in FIG. 5, viewed from another perspective.
FIG. 8 is a schematic view of a composition of an A-pillar body according to an embodiment of the invention.
FIG. 9 is a schematic view of an arrangement of an A-pillar lower-segment reinforcement according to an embodiment of the invention.
FIG. 10 is a schematic structural view of an A-pillar lower-segment reinforcement according to an embodiment of the invention.
FIG. 11 is a schematic view of a connection between a lower cowl crossmember and an A-pillar according to an embodiment of the invention.

Description of reference numerals of the accompanying drawings:
1: sill beam; 2: A-pillar; 3: front floor crossmember; 4: rivet; 5: lower cowl crossmember;
21: A-pillar body; 211: A-pillar inner plate; 212: A-pillar reinforcement plate; 21a: through hole; 22: connection member; 221: post connection part; 2211: connection flange; 2212: connection passage hole; 222: sill connection part; 223: middle connection part; 224: connection boss; 224a: connection groove; 225: reinforcing rib; 22a: accommodation groove; 23: A-pillar lower-segment reinforcement;
M: inner side material removal region; N: outer side material removal region; G: a part of an A-pillar embedded into an accommodation groove; k: mounting groove.

### DETAILED DESCRIPTION

It should be noted that, the embodiments of the present disclosure and features in the embodiments can be combined with each other without any conflict.

In the description of the invention, it should be noted that, the orientation or the position indicated by terms such as "over", "below", "inner", and "outer" should be construed to refer to the orientation and the position as shown in the drawings, and is only for the convenience of describing the invention and simplifying the description, rather than indicating or implying that the referred device or element must have a specific orientation, or be constructed and operated in a specific orientation, and therefore cannot be understood as a limitation of the invention. In addition, terms such as "first" and "second" are only used for descriptive purposes, and cannot be understood as indicating or implying relative importance.

In addition, in the description of the invention, unless otherwise clearly limited, terms such as "install", "connect", "connect to", and "connection member" should be understood in a broad sense. For example, it may be a fixed connection or a detachable connection or connection as one piece, mechanical connection or electrical connection, direct connection or indirect connection through an intermediate, internal communication of two components. For those of ordinary skill in the art, the specific meaning of the above-mentioned terms in the invention can be understood according to specific circumstances.

The invention will be described in detail below with reference to the accompanying drawings and in conjunction with the embodiments.

### First embodiment

The invention relates to a vehicle body structure, which increases connection stiffness between a root of an A-pillar 2 and a sill beam 1 and enhances a collision force transmission capability between the A-pillar 2 and the sill beam 1, improving overall collision safety of the vehicle.

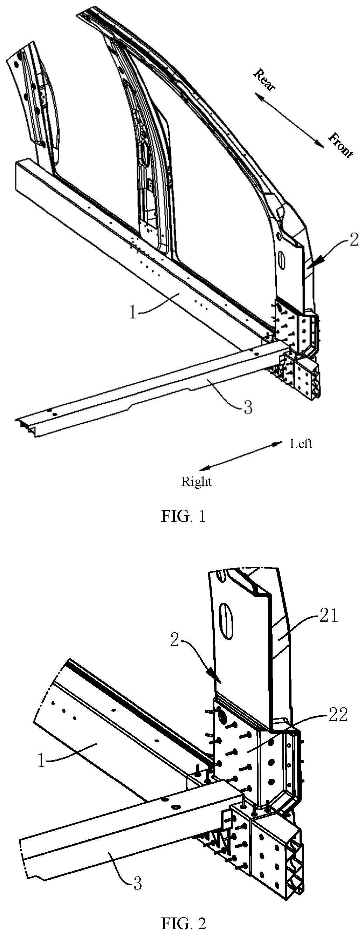

In an overall structure, as illustrated in FIG. 1 to FIG. 4, the vehicle body structure according to the invention includes the sill beam 1 and the A-pillar 2. The root of the A-pillar 2 is connected to the sill beam 1.

The A-pillar 2 includes an A-pillar body 21 and a connection member 22 connected to a bottom of the A-pillar body 21. In a left-right direction of a vehicle, the connection member 22 is located on an inner side of the A-pillar body 21, i.e., a side of the A-pillar body 21 facing towards an interior of the vehicle. In addition, a mounting groove k is defined by the connection member 22 and the A-pillar body 21. The sill beam 1 is located in the mounting groove k, and is connected to the A-pillar body 21 and the connection member 22.

In the above arrangement of the invention, the connection member 22 is disposed at the side of the root of the A-pillar 2, in such a manner that the mounting groove k is defined by the connection member 22 and the A-pillar body 21, and the sill beam 1 is located in the mounting groove k and is connected to the A-pillar body 21 and the connection member 22. In the invention, the A-pillar body 21 and the connection member 22 can be used to tightly hold the sill beam 1 from two sides of the sill beam 1, and a connection between the sill beam 1 and each of the A-pillar body 21 and the connection member 22 is utilized. In this way, connection stiffness between the root of the A-pillar 2 and the sill beam 1 is increased, achieving an effect of enhancing the collision force transmission capability between the A-pillar 2 and the sill beam 1.

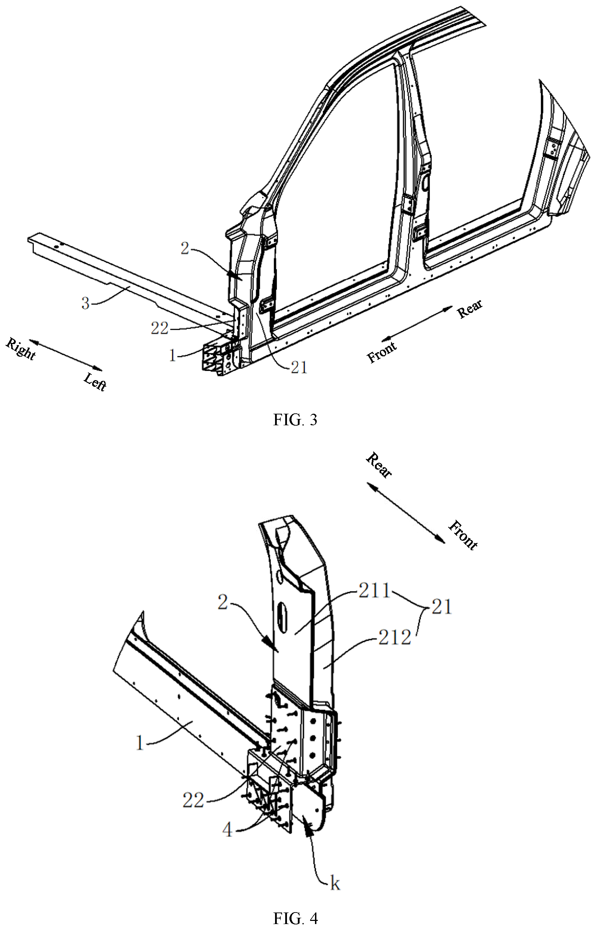

Based on the above overall explanation, specifically, as illustrated in FIG. 4, the mounting groove k defined by the A-pillar body 21 and the connection member 22 refers specifically a groove structure located at a bottom end of the A-pillar 2 and opened at a front side, a rear side, and a bottom of the mounting groove k. In a specific implementation, the sill beam 1 may generally be fixedly connected to an inner side of the A-pillar body 21, and then the connection member 22 is sequentially fixedly connected to the A-pillar body 21 and the sill beam 1, in such a manner that the mounting groove k is formed and the sill beam 1 is clamped and tightly held in the mounting groove k.

In addition to the forming method described above, the above mounting groove k can also be formed through other manufacturing processes such that the sill beam 1 is disposed in the mounting groove k. Further, it should also be noted that, in addition to the preferred implementation where the connection member 22 is located on the inner side of the A-pillar body 21, depending on design requirements, it is also feasible to position the connection member 22 on an outer side of the A-pillar body 21 in the left-right direction of the vehicle, i.e., a side of the A-pillar body 21 facing towards an exterior of the vehicle.

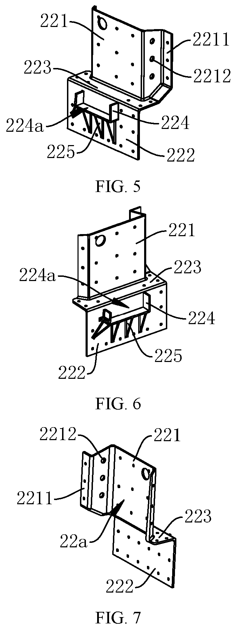

In a preferred implementation, as illustrated in FIG. 5 to FIG. 7, the connection member 22 may be, for example, formed as one piece. In addition, in the structure of the connection member 22, the connection member 22 also has a body connection part 221, a middle connection part 223, and a sill connection part 222 that are sequentially connected from top to bottom. The body connection part 221 is lapped onto and fixedly connected to the A-pillar body 21. The mounting groove k is defined by the sill connection part 222 and a bottom end of the A-pillar body 21. The sill connection part 222 is also lapped onto and fixedly connected to the sill beam 1.

In the above embodiment, the connection member 22 is in a stepped shape, and has the body connection part 221 connected to the A-pillar body 21 and the sill connection part 222 connected to the sill beam 1, which not only ensure structural strength of the connection member 22 by means of integral forming, but also further increase overall stiffness of the root of the A-pillar 2 using a connection of the connection member 22 between the root of the A-pillar body 21 and the sill beam 1, which is conducive to enhancing the collision force transmission capability between the A-pillar 2 and the sill beam 1.

In a specific implementation, as illustrated in FIG. 2, the middle connection part 223, for example, may also be lapped onto and fixed to a top of the sill beam 1. In this way, enabling the middle connection part 223 to be lapped onto and fixed to the top of the sill beam 1 not only increases connection strength between the connection member 22 and the sill beam 1, but also improves stability of the sill beam 1 disposed in the mounting groove k, and facilitate a connection between a vehicle body side structure formed by the connection member 22 and the sill beam 1 and a vehicle body crossmember structure such as a front floor crossmember 3.

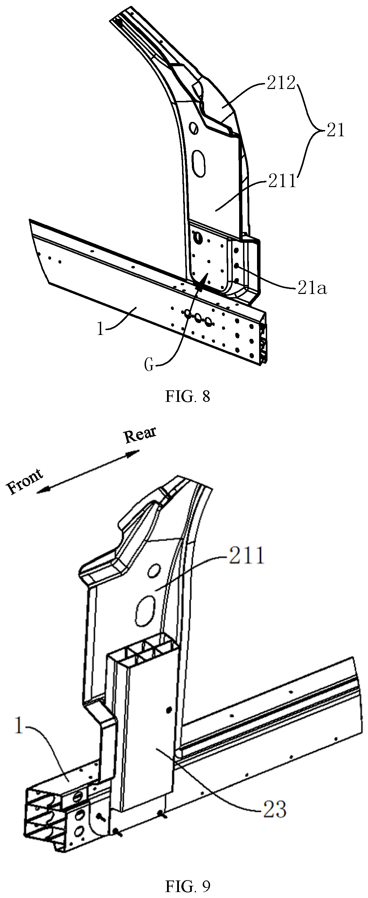

In a preferred implementation, as illustrated in FIG. 7, the body connection part 221 has an accommodation groove 22a. Also, as illustrated in FIG. 8, a part indicated by reference numeral G on the A-pillar body 21 is embedded into the accommodation groove 22a. In this way, it should be understood that, by forming the accommodation groove 22a on the body connection part 221 and enabling the A-pillar body 21 to be partially embedded into the accommodation groove 22a, a connection between the connection member 22 and the A-pillar body 21 is facilitated, and reliability of the connection between the connection member 22 and the A-pillar body 21 is also increased.

In a preferred implementation, as illustrated in FIG. 5, the body connection part 221 is provided with a connection flange 2211 and a connection passage hole 2212 that are on a side of the body connection part 221 facing towards a front of the vehicle. The connection flange 2211 is lapped onto and fixed to the A-pillar body 21 as illustrated in FIG. 4. The connection passage hole 2212 is used for allowing a connection component connected to the A-pillar body 21 to pass through.

In the above embodiment, it should be understood that, by providing the connection flange 2211 and the connection passage hole 2212 at the side of the body connection part 221 facing towards the front of the vehicle, the connection member 22 is fully utilized to increase reliability of a connection between the A-pillar 2 and a part of the vehicle body structure located on a front side of the A-pillar body 21, and downward transmission and dispersion of a collision force to the sill beam 1 through the connection member 22 is also facilitated, improving a transmission effect of the collision force at the A-pillar 2.

It should be noted that, in the vehicle body, the part of the vehicle body structure located on the front side of the A-pillar 2 may be, for example, a lower cowl crossmember 5 described below. In addition to the lower cowl crossmember 5, the vehicle body structure may further include a structure such as a torque box. The connection component may be, for example, a bolt or the like. Thus, the structure located on the front side of the A-pillar 2, such as the lower cowl crossmember 5, may be connected to the A-pillar 2 through a threaded connection structure. The threaded connection structure passes through the connection passage hole 2212 and a through hole 21a that is on the A-pillar body 21 to be connected to the A-pillar 2.

In a preferred implementation, as illustrated in FIG. 5 and FIG. 6, based on the fact that the connection member 22 is located on the inner side of the A-pillar body 21, the sill connection part 222 is provided with a connection boss 224 connected to the front floor crossmember 3 in the vehicle body. In this way, the connection boss 224 at the sill connection part 222 facilitates a connection to the front floor crossmember 3, and also increases reliability of a connection between the connection member 22 and the front floor crossmember 3.

In a specific implementation, preferably, the connection boss 224 may also have a connection groove 224a. An end portion of the front floor crossmember 3 is partially embedded into the connection groove 224a, and then connected to the connection member 22. In the above embodiment, it should be understood that, forming the connection groove 224a on the connection boss 224 further facilitates a connection operation between the front floor crossmember 3 and the connection member 22, and increases the reliability of the connection between the front floor crossmember 3 and the connection member 22.

It should be noted that, as illustrated in FIG. 1 and FIG. 2, a remaining part, other than the part embedded into the connection groove 224a, of the end portion of the front floor crossmember 3 is lapped onto and fixedly connected to the middle connection part 223 of the connection member 22.

Further, in a preferred implementation, based on the arrangement of the connection boss 224, for example, the sill connection part 222 may be provided with a reinforcing rib 225 connected to the connection boss 224. In this way, by providing the reinforcing rib 225 connected to the connection boss 224, structural strength at the connection boss 224 is increased by means of the reinforcing rib 225, to better ensure stability of a connection of the front floor crossmember 3 at the connection boss 224, which facilitates transmission and dispersion of the collision force from the connection member 22 to the front floor crossmember 3.

In a specific implementation, the reinforcing rib 225, for example, may be located at a bottom of the connection boss 224. In addition, based on factors such as a wall thickness of the connection boss 224 and a groove width of the connection groove 224a, a plurality of reinforcing ribs 225 may be provided and arranged in parallel to ensure an arrangement effect of the plurality of reinforcing ribs 225.

In a specific implementation, for example, the body connection part 221 of the connection member 22 may be connected to the A-pillar body 21, the sill connection part 222 of the connection member 22 may be connected to the sill beam 1 by a rivet, and the middle connection part 223 of the connection member 22 may be connected to the sill beam 1 by a rivet 4. In the above embodiment, it should be understood that the body connection part 221 is connected to the A-pillar body 21 by the rivet, the sill connection part 222 is connected to the sill beam 1 by the rivet, and the middle connection part 223 is connected to the sill beam 1 by the rivet, which facilitates the connection operation while ensuring connection effect between the connection member 22 and the A-pillar body 21 and connection effect between the connection member 22 and the sill beam 1. In this way, connection costs are reduced.

It should be noted that, in a specific implementation, in addition to using rivets 4 for connections, each of the sill beam 1 and the A-pillar body 21 may also be connected to the connection member 22 through a threaded connection or other conventional connection methods, as long as the connection effect between the connection member 22 and the A-pillar body 21 and the connection effect between the connection member 22 and the sill beam 1 are ensured.

In a specific implementation, for the connection member 22 formed as one piece, for example, the connection member 22 may be integrally cast from an aluminum alloy. In this way, the connection member 22 integrally cast from the aluminum alloy facilitates manufacture of the connection member 22 and also takes advantage of low weight and high strength of a cast aluminum structure, facilitating a lightweight design of the connection member 22 and ensure structural strength of the connection member 22.

Preferably, the sill beam 1 may be made of, for example, an extruded aluminum profile. Thus, low weight and high strength of an extruded aluminum structure is also similarly utilized, which is conducive to a lightweight design of the sill beam 1 while ensuring structural strength of the sill beam 1.

As illustrated in FIG. 4 and FIG. 8, and in conjunction with FIG. 9, in a preferred implementation, the A-pillar body 21 may structurally include, for example, an A-pillar inner plate 211 and an A-pillar reinforcement plate 212 that are assembled with each other. Also, an A-pillar lower-segment reinforcement 23 is also disposed in a space defined by the A-pillar inner plate 211 and the A-pillar reinforcement plate 212, i.e., in the A-pillar 2. A bottom of the A-pillar lower-segment reinforcement 23 is abutted with the sill beam 1 in the left-right direction of the vehicle, and is also connected to the sill beam 1.

In the above embodiment, the bottom of the A-pillar lower-segment reinforcement 23 being abutted with the sill beam 1 means that projections of the A-pillar lower-segment reinforcement 23 and the sill beam 1 in the left-right direction of the vehicle at least partially overlap. In addition, it should be understood that, by configuring the A-pillar body 21 to include the A-pillar inner plate 211 and the A-pillar reinforcement plate 212 that are assembled with each other, disposing the A-pillar lower-segment reinforcement 23 in the A-pillar 2, and allowing the bottom of the A-pillar lower-segment reinforcement 23 to be abutted with the sill beam 1, stiffness of a lower part of the A-pillar 2 is further increased, and the A-pillar lower-segment reinforcement 23 is allowed to join in clamping the sill beam 1, better increasing connection stiffness between the A-pillar 2 and the sill beam 1.

In a specific implementation, the A-pillar inner plate 211 and the A-pillar reinforcement plate 212, for example, may be both made of a carbon fiber composite material. In this way, it should be understood that, by having the A-pillar inner plate 211 and the A-pillar reinforcement plate 212 both made of the carbon fiber composite material, characteristics of low weight, high strength, and ease of styling design of a carbon fiber structure is utilized, which facilitates a lightweight design and a styling design of the A-pillar 2, and also ensures structural strength of the A-pillar 2.

It should be noted that, when the A-pillar inner plate 211 and the A-pillar reinforcement plate 212 are made of the carbon fiber composite material, the A-pillar inner plate 211 may be connected to each of the A-pillar reinforcement plate 212 and the sill beam 1 through structural adhesive bonding. In addition, besides being made of the carbon fiber composite material, the A-pillar inner plate 211 and A-pillar reinforcement plate 212 may also include conventional stamped sheet metal structures in a specific implementation.

In a preferred implementation, the A-pillar lower-segment reinforcement 23 located in the A-pillar 2 may be made of, for example, an aluminum profile. In addition, having the A-pillar lower-segment reinforcement 23 made of the aluminum profile not only facilitates a weight reduction of the A-pillar lower-segment reinforcement 23, but also ensures structural strength of the A-pillar lower-segment reinforcement 23. In a specific implementation, generally, the A-pillar lower-segment reinforcement 23 is connected to the sill beam 1 through a threaded connection structure or a riveted structure passing through the A-pillar inner plate 211.

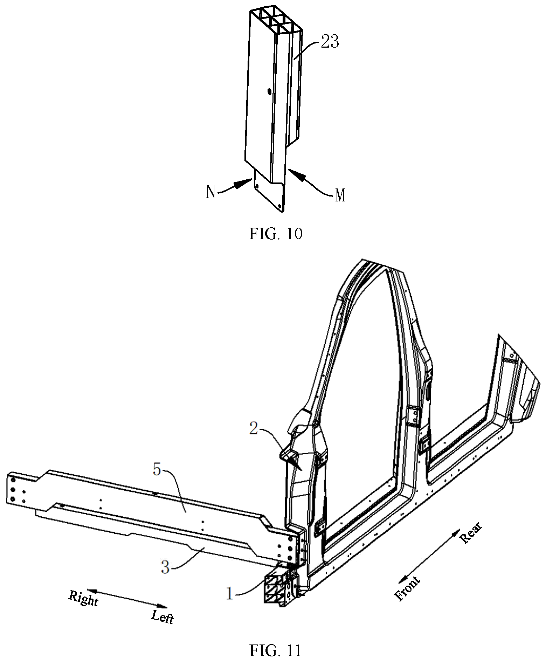

When the A-pillar lower-segment reinforcement 23 is made of the aluminum profile, as illustrated in FIG. 10, to meet arrangement requirements at the bottom end of the A-pillar 2, for example, parts indicated by reference numeral M and reference numeral N at an inner side and an outer side of the A-pillar lower-segment reinforcement 23 may be removed through a machining process after the A-pillar lower-segment reinforcement 23 is extruded. In this way, both an arrangement of the A-pillar lower-segment reinforcement 23 within the A-pillar 2 and a connection between the A-pillar lower-segment reinforcement 23 and the sill beam 1 is facilitated.

Further, when the A-pillar lower-segment reinforcement 23 is provided in the A-pillar 2, the part of the vehicle body structure located on the front side of the A-pillar 2, such as the lower cowl crossmember 5, may be directly connected to the A-pillar lower-segment reinforcement 23 through the connection passage hole 2212 and through hole 21a. In this way, a formation of a connection and matching structure such as a threaded hole on the A-pillar 2 is facilitated, and stability of a connection between the A-pillar 2 and a surrounding structure is be ensured.

In a specific implementation, based on an arrangement of the A-pillar lower-segment reinforcement 23, the A-pillar lower-segment reinforcement 23, the A-pillar body 21, and an upper part of the connection member 22 may also be connected to one another by a first connection structure. In the above embodiment, the upper part of the connection member 22 is the body connection part 221, and the first connection structure may still be, for example, the rivet 4 connecting the body connection part 221 to the A-pillar body 21, except that the rivet 4 should pass through the A-pillar inner plate 211 to be connected to the A-pillar lower-segment reinforcement 23.

It should be understood that, the A-pillar lower-segment reinforcement 23, the A-pillar body 21, and the upper part of the connection member 22 are connected to each other, which increases overall stiffness of the root of the A-pillar 2 and structural stability of the mounting groove k formed at the bottom end of the A-pillar 2, ensuring connection reliability between the A-pillar 2 and the sill beam 1.

As mentioned above and with reference to FIG. 11, the A-pillar 2 may be, for example, provided with a lower cowl crossmember 5 on a front side of the A-pillar 2, and the A-pillar lower-segment reinforcement 23, the A-pillar body 21, the connection member 22, and the lower cowl crossmember 5 are connected to one another by a second connection structure. In the above embodiment, the A-pillar lower-segment reinforcement 23, the A-pillar body 21, the connection member 22, and the lower cowl crossmember 5 are connected to each other which increases reliability of a connection between the A-pillar 2 and the lower cowl crossmember 5, which therefore improves stability of an arrangement of the lower cowl crossmember 5 in the vehicle body and a transmission effect of the collision force between the A-pillar 2 and the lower cowl crossmember 5.

It should be noted that, in a specific implementation, the second connection structure may include the connection component that passes through the connection passage hole 2212 and the through hole 21a as described above. The through hole 21a is specifically located on the A-pillar reinforcement plate 212. Preferably, a plurality of second connection structures may be provided and arranged at intervals to ensure the reliability of the connection between the lower cowl crossmember 5 and the A-pillar 2.

With the vehicle body structure, the connection member 22 is disposed at the root of the A-pillar 2. The mounting groove k is formed at the bottom of the A-pillar 2 through provision of the connection member 22. In addition, the sill beam 1 is located in the mounting groove k, and is connected to the A-pillar body 21 and the connection member 22. Also, by disposing the A-pillar lower-segment reinforcement 23 in the A-pillar body 21, the sill beam 1 is fixed and tightly held in the A-pillar 2. Thus, the connection stiffness between the root of the A-pillar 2 and the sill beam 1 is increased, and the collision force transmission capability between the A-pillar 2 and the sill beam 1 is enhanced, which improves the overall vehicle collision safety, providing satisfactory practicality.

### Second embodiment

The invention relates to a vehicle. The vehicle includes the vehicle body structure according to the first embodiment.

In the vehicle body structure of the vehicle according to the first embodiment, the connection stiffness between the root of the A-pillar 2 and the sill beam 1 is increased, and the collision force transmission capability between the A-pillar 2 and the sill beam 1 is also enhanced, which is conducive to improving the overall vehicle collision safety, providing the satisfactory practicality.

The above descriptions are merely preferred embodiments of the invention, and are not intended to limit the invention. Any modifications, equivalent substitutions, improvements, or the like made within the spirit and principle of the invention shall fall within the protection scope of the invention.

## Claims

1. A vehicle body structure, comprising:
a sill beam (1); and
an A-pillar (2) having a root connected to the sill beam (1), wherein:
the A-pillar (2) comprises an A-pillar body (21) and a connection member (22) connected to a bottom of the A-pillar body (21), the connection member (22) being located on a side of the A-pillar body (21) in a left-right direction of a vehicle, and a mounting groove (k) being defined by the connection member (22) and the A-pillar body (21); and
the sill beam (1) is located in the mounting groove (k), and is connected to the A-pillar body (21) and the connection member (22).

2. The vehicle body structure according to claim 1, wherein:
the mounting groove (k) is a groove structure located at a bottom end of the A-pillar (2) and opened at a front side, a rear side, and a bottom of the mounting groove (k); and
the sill beam (1) is fixedly connected to an inner side of the A-pillar body (21), and then the connection member (22) is sequentially fixedly connected to the A-pillar body (21) and the sill beam (1), in such a manner that the mounting groove (k) is formed and the sill beam (1) is clamped and tightly held in the mounting groove (k).

3. The vehicle body structure according to claim 1, wherein:
the connection member (22) is formed as one piece; and
the connection member (22) has a body connection part (221), a middle connection part (223), and a sill connection part (222) that are sequentially connected from top to bottom, wherein the body connection part (221) is lapped onto and fixedly connected to the A-pillar body (21), wherein the mounting groove (k) is defined by the sill connection part (222) and a bottom end of the A-pillar body (21), and wherein the sill connection part (222) is lapped onto and fixedly connected to the sill beam (1).

4. The vehicle body structure according to claim 3, wherein:
the middle connection part (223) is lapped onto and fixed to a top of the sill beam (1); and/or
the body connection part (221) has an accommodation groove (22a), the A-pillar body (21) being partially embedded into the accommodation groove (22a).

5. The vehicle body structure according to claim 3, wherein:
the connection member (22) is located on a side of the A-pillar body (21) facing towards an interior of the vehicle; and
the sill connection part (222) is provided with a connection protrusion (224) connected to a front floor crossmember (3).

6. The vehicle body structure according to claim 5, wherein:
the connection protrusion (224) has a connection groove (224a), an end portion of the front floor crossmember (3) being partially embedded into the connection groove (224a); and/or
the sill connection part (222) is provided with a reinforcing rib (225) connected to the connection protrusion (224).

7. The vehicle body structure according to claim 6, wherein:
a remaining part, other than the part embedded into the connection groove (224a), of the end portion of the front floor crossmember (3) is lapped onto and fixedly connected to the middle connection part (223) of the connection member (22); and
the body connection part (221) is provided with a connection flange (2211) on a side of the body connection part (221) facing towards a front of the vehicle, the connection flange (2211) being lapped onto and fixed to the A-pillar body (21).

8. The vehicle body structure according to claim 3, wherein:
the connection member (22) is integrally cast from an aluminum alloy; and/or
the body connection part (221) is connected to the A-pillar body (21) by a rivet (4), and the sill connection part (222) is connected to the sill beam (1) by a further rivet (4).

9. The vehicle body structure according to any one of claims 1 to 8, wherein the A-pillar body (21) comprises an A-pillar inner plate (211) and an A-pillar reinforcement plate (212) that are assembled with each other, wherein an A-pillar lower-segment reinforcement (23) is disposed in a space defined by the A-pillar inner plate (211) and the A-pillar reinforcement plate (212), wherein a bottom of the A-pillar lower-segment reinforcement (23) is abutted with the sill beam (1) in the left-right direction of the vehicle and is connected to the sill beam (1).

10. The vehicle body structure according to claim 9, wherein:
the A-pillar inner plate (211) and the A-pillar reinforcement plate (212) are both made of a carbon fiber composite material; and/or
the A-pillar lower-segment reinforcement (23) is made of an aluminum profile.

11. The vehicle body structure according to claim 9, wherein the A-pillar lower-segment reinforcement (23), the A-pillar body (21), and an upper part of the connection member (22) are connected to one another by a first connection structure.

12. The vehicle body structure according to claim 9, wherein:
the A-pillar (2) is provided with a lower cowl crossmember (5) on a front side of the A-pillar (2); and
the A-pillar lower-segment reinforcement (23), the A-pillar body (21), the connection member (22), and the lower cowl crossmember (5) are connected to one another by a second connection structure.

13. The vehicle body structure according to claim 12, wherein the second connection structure comprises a connection component that passes through a connection passage hole (2112) and a through hole (21a), wherein:
the connection passage hole (2112) is located on a side of the body connection part (221) of the connection member (22) facing towards a front of the vehicle; and
the through hole (21a) is located on the A-pillar reinforcement plate (212).

14. The vehicle body structure according to claim 9, wherein the sill beam (1) is made of an extruded aluminum profile.

15. A vehicle, comprising the vehicle body structure according to any one of claims 1 to 14.
